# EUROPEAN PATENT APPLICATION

(11) **EP 1 712 576 A1**
(43) Date of publication of application: **18.10.2006**
(21) Application number: 06006229.6
(22) Date of filing: 27.03.2006
(51) Int. Cl.: C08G 18/36, C08G 18/65, C08G 18/66, C08G 18/48, C08G 65/26

(54) **Polyurethane foams made with alkoxylated vegetable oil hydroxylate**

(30) Priority: 06.04.2005 US 100221
(71) Applicant: Bayer MaterialScience LLC, Pittsburgh PA 15205 (US)
(72) Inventor: Hsiao, Yu-Ling, Villanova PA 19085 (US); Skorpenske,Richard, G., South Charleston WV 25309 (US); Kaushiva, Bryan, D., Baltimore MD 21231 (US); McDaniel, Kenneth, G., Charleston WV 25311 (US); Pazos, Jose, F., Charleston WV 25304 (US); Hager, Stanley, L., Cross Lanes WV 25313 (US); Haider, Karl, W., Hurricane WV 25526 (US)
(74) Representative: Perchenek, Nils

(57) **Abstract**

The present invention provides polyurethane foams and elastomers made with an alkoxylated vegetable oil hydroxylate replacing at least a portion of the typically used petroleum-based polyol(s). Also provided are processes for making the inventive foams and elastomers and for making alkoxylated vegetable oil hydroxylates. The alkoxylated vegetable oil hydroxylates are environmentally-friendly, bio-based polyols which advantageously also offer the potential of improved hydrophobicity in polyurethane foams and elastomers. The inventive polyurethane foams and elastomers may find use in a wide variety of products such as automobile interior parts, polyurethane structural foams, floor coatings and athletic running tracks.

## Description

### Field of the Invention

The present invention relates, in general, to polyurethanes, and more specifically, to polyurethane foams and elastomers in which at least a portion of the petroleum-derived polyol(s) is replaced with an alkoxylated vegetable oil hydroxylate.

### Background of the Invention

Polyurethane foams and elastomers have found extensive use in a multitude of industrial and consumer applications. This popularity is due to polyurethane's wide ranging mechanical properties and its ability to be relatively easily manufactured. Automobiles, for example, contain numerous polyurethane components, such as seats, dashboards and other cabin interior parts. Polyurethane foams have traditionally been categorized as being flexible (or semi-rigid) or rigid foams; with flexible foams generally being softer, less dense, more pliable and more subject to structural rebound subsequent loading than are rigid foams.

The production of polyurethane foams is well known to those skilled in the art. Polyurethanes are formed from the reaction of NCO groups with hydroxyl groups. The most common method of polyurethane production is via the reaction of a polyol and an isocyanate which forms the backbone urethane group. Cross linking agents, blowing agents, catalysts and other additives may also be included in the polyurethane formulation as needed.

Polyols used in the production of polyurethanes are typically petrochemical in origin, being generally derived from propylene oxide, ethylene oxide and various starters such as ethylene glycol, propylene glycol, glycerin, sucrose and sorbitol. Polyester polyols and polyether polyols are the most common polyols used in polyurethane production. For semi-rigid foams, polyester or polyether polyols with molecular weights of from about 300 to 2,000 are generally used, whereas for flexible foams longer chain polyols with molecular weights of from about 1,000 to 10,000 are typically used. Polyester and polyether polyols can be selected to allow the engineering of a particular polyurethane elastomer or foam having desired final toughness, durability, density, flexibility, compression set ratios and modulus and hardness qualities. Generally, higher molecular weight polyols and lower functionality polyols tend to produce more flexible foams than do lower molecular weight polyols and higher functionality polyols.

Petroleum-derived components such as polyester and polyether polyols pose several disadvantages. Use of such polyester or polyether polyols contributes to the depletion of oil, which is a non-renewable resource. Also, the production of a polyol requires the investment of a great deal of energy because the oil to make the polyol must be drilled, extracted and transported to a refinery where it is refined and processed to yield the finished polyol. As the consuming public becomes increasingly aware of the environmental impact of this production chain, consumer demand for "greener" products will continue to grow. To help reduce the depletion of oil whilst satisfying this increasing consumer demand, it would be advantageous to partially or wholly replace petroleum-derived polyester or polyether polyols used in the production of polyurethane elastomers and foams with more versatile, renewable and more environmentally responsible components.

Attempts have been made by workers in the art to accomplish this replacement. Plastics and foams made using fatty acid triglycerides derived from vegetables, including soybean derivatives, have been developed. As a renewable, versatile, and environmentally-friendly resource, soybeans have been, and will continue to be, desirable as ingredients for plastics manufacture.

For example, U.S. Pat. No. 5,221,433, issued to Daute et al., teaches the use of an alkoxylated soybean oil obtained by epoxidizing soybean oil followed by hydrogenation over a nickel catalyst. The hydroxyl functional oil is alkoxylated using potassium hydroxide catalysis and the product used for deinking. However, Daute et al. do not suggest the use of these oils in making polyurethane foams or elastomers.

Daute et al., in U.S. Pat. No. 5,512,134, provide a process for removing printing inks from printed wastepaper in the presence of a deinking chemical. Alkoxylates of blown oils are used as the deinking chemical in the process. Among the alkoxylates described are those of blown oils, such as fish, rapeseed and soybean, in which the oxyalkylene component makes up from 20 to 95% by weight and preferably from 50 to 80% by weight. No suggestion is made by Daute et al. of using these alkoxylates in making polyurethanes.

U.S. Pat. No. 5.516,853, issued to Schneider et al., discloses that alkoxylated soybean oil can be used in the production of unsaturated polyesters. The use of these materials is taught in water dilutable binders and in water reducible lacquers. No use in polyurethane is taught or suggested by Schneider et al.

Kurth, in a number of patents including U.S. Pat. Nos. 6,180,686; 6,465,569; and 6,624,244, teaches the use of unmodified (oxidized) soybean oil as a polyol in the production of polyurethane materials. The oil is blown with air to oxidize it, but no other modification is taught before use of this oxidized soybean oil as a substitute for petroleum-based polyols.

U.S. Published Patent Application No. 2004/0209971 A1, in the name of Kurth et al., describes an oxylation process for vegetable oils and polyurethanes formed from those oxylated oils. It appears that Kurth et al. propoxylate the transesterified-blown oil or they use a propoxylated glycerin or other material for their transesterification. Kurth et al. teach a limit of 5-10% for their oxylation compound. In addition, Kurth et al. may blend in and use THF or other furfural derivatives to make foams.

Therefore, a need continues to exist in the art for polyurethane foams and elastomers made with environmentally-friendly, renewable components.

### Summary of the Invention

Accordingly, the present invention provides polyurethane foams and elastomers made from an alkoxylated vegetable oil hydroxylate. The alkoxylated vegetable oil hydroxylates are environmentally-friendly, "biobased" polyols which also offer the potential of improved hydrophobicity in polyurethanes. The alkoxylated vegetable oil hydroxylate can replace all or a portion of the petroleum-derived polyol(s) in the polyurethane forming formulation. The inventive foams are usable in many applications.

These and other advantages and benefits of the present invention will be apparent from the Detailed Description of the Invention herein below.

### Detailed Description of the Invention

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a polyurethane foam or elastomer containing the reaction product of at least one polyisocyanate and at least one alkoxylated vegetable oil hydroxylate containing from 15 wt.% to 90 wt.% alkoxylate, based on the weight of the alkoxylated vegetable oil hydroxylate, optionally, at least one non-vegetable oil-based polyol, optionally in the presence of at least one of blowing agents, surfactants, pigments, flame retardants, catalysts and fillers.

The present invention further provides a process for making a polyurethane foam or elastomer involving reacting at least one polyisocyanate and at least one alkoxylated vegetable oil hydroxylate containing from 15 wt.% to 90 wt.% alkoxylate, based on the weight of the alkoxylated vegetable oil hydroxylate, optionally, at least one non-vegetable oil-based polyol, optionally in the presence of at least one of blowing agents, surfactants, pigments, flame retardants, catalysts and fillers.

The present invention still further provides a polyurethane foam or elastomer containing the reaction product of at least one polyisocyanate and at least one alkoxylated vegetable oil hydroxylate containing from 15 wt.% to 90 wt.% alkoxylate, based on the weight of the alkoxylated vegetable oil hydroxylate and alkoxylated in the presence of a double metal cyanide (DMC) catalyst, optionally, at least one non-vegetable oil-based polyol, optionally in the presence of at least one of blowing agents, surfactants, pigments, flame retardants, catalysts and fillers.

The present invention yet further provides a process for making a polyurethane foam or elastomer involving reacting at least one polyisocyanate and at least one alkoxylated vegetable oil hydroxylate containing from about 15 wt.% to about 90 wt.% alkoxylate, based on the weight of the alkoxylated vegetable oil hydroxylate and alkoxylated in the presence of a double metal cyanide (DMC) catalyst, optionally, at least one non-vegetable oil-based polyol, optionally in the presence of at least one of blowing agents, surfactants, pigments, flame retardants, catalysts and fillers.

The present invention also provides a continuous process for the preparation of an alkoxylated vegetable oil hydroxylate involving a) establishing in a continuous reactor a first portion of a mixture of a double metal cyanide (DMC) catalyst and hydroxylated vegetable oil effective to initiate polyoxyalkylation of the hydroxylated vegetable oil after introduction of alkylene oxide into the continuous reactor, b) continuously introducing into the continuous reactor one or more alkylene oxides, c) continuously introducing into the continuous reactor hydroxylated vegetable oil, d) continuously introducing into the reactor fresh double metal cyanide (DMC) catalyst and/or further double metal cyanide (DMC) catalyst/further hydroxylated vegetable oil mixture such that the catalytic activity is maintained, e) polyoxyalkylating the hydroxylated vegetable oil by continuously repeating steps a) through d) to produce an alkoxylated vegetable oil hydroxylate and f) continuously removing the alkoxylated vegetable oil hydroxylate from the continuous reactor.

Suitable polyisocyanates are known to those skilled in the art and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula,

Q(NCO)ₙ

in which n is a number from 2-5, preferably 2-3, and Q is an aliphatic hydrocarbon group containing 2-18, preferably 6-10, carbon atoms; a cycloaliphatic hydrocarbon group containing 4-15, preferably 5-10, carbon atoms; an araliphatic hydrocarbon group containing 8-15, preferably 8-13, carbon atoms; or an aromatic hydrocarbon group containing 6-15, preferably 6-13, carbon atoms.

Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3-and -1,4-diisocyanate, and mixtures of these isomers; 1-isocyanato-3,3,5-trimethyl-5-isocyanatomethylcyclohexane (isophorone diisocyanate; e.g. German Auslegeschrift 1,202,785 and U.S. Pat. No. 3,401,190); 2,4- and 2,6-hexahydrotoluene diisocyanate and mixtures of these isomers; dicyclohexylmethane-4,4'-diisocyanate (hydrogenated MDI, or HMDI); 1,3-and 1,4-phenylene diisocyanate; 2,4- and 2,6-toluene diisocyanate and mixtures of these isomers (TDI); diphenylmethane-2,4'- and/or -4,4'-diisocyanate (MDI); naphthylene-1,5-diisocyanate; triphenylmethane-4,4',4"-triisocyanate; polyphenyl-polymethylene-polyisocyanates of the type which may be obtained by condensing aniline with formaldehyde, followed by phosgenation (crude MDI), which are described, for example, in GB 878,430 and GB 848,671; norbornane diisocyanates, such as described in U.S. Pat. No. 3,492,330; m- and p-isocyanatophenyl sulfonylisocyanates of the type described in U.S. Pat. No. 3,454,606; perchlorinated aryl polyisocyanates of the type described, for example, in U.S. Pat. No. 3,227,138; modified polyisocyanates containing carbodiimide groups of the type described in U.S. Pat. No. 3,152,162; modified polyisocyanates containing urethane groups of the type described, for example, in U.S. Pat. Nos. 3,394,164 and 3,644,457; modified polyisocyanates containing allophanate groups of the type described, for example, in GB 994,890, BE 761,616, and NL 7,102,524; modified polyisocyanates containing isocyanurate groups of the type described, for example, in U.S. Pat. No. 3,002,973, German Patentschriften 1,022,789, 1,222,067 and 1,027,394, and German Offenlegungsschriften 1,919,034 and 2,004,048; modified polyisocyanates containing urea groups of the type described in German Patentschrift 1,230,778; polyisocyanates containing biuret groups of the type described, for example, in German Patentschrift 1,101,394, U.S. Pat. Nos. 3,124,605 and 3,201,372, and in GB 889,050; polyisocyanates obtained by telomerization reactions of the type described, for example, in U.S. Pat. No. 3,654,106; polyisocyanates containing ester groups of the type described, for example, in GB 965,474 and GB 1,072,956, in U.S. Pat. No. 3,567,763, and in German Patentschrift 1,231,688; reaction products of the above-mentioned isocyanates with acetals as described in German Patentschrift 1,072,385; and polyisocyanates containing polymeric fatty acid groups of the type described in U.S. Pat. No. 3,455,883. It is also possible to use the isocyanate-containing distillation residues accumulating in the production of isocyanates on a commercial scale, optionally in solution in one or more of the polyisocyanates mentioned above. Those skilled in the art will recognize that it is also possible to use mixtures of the polyisocyanates described above.

In general, it is preferred to use readily available polyisocyanates, such as 2,4- and 2,6-toluene diisocyanates and mixtures of these isomers (TDI); polyphenyl-polymethylene-polyisocyanates of the type obtained by condensing aniline with formaldehyde, followed by phosgenation (crude MDI); and polyisocyanates containing carbodiimide groups, urethane groups, allophanate groups, isocyanurate groups, urea groups, or biuret groups (modified polyisocyanates).

Isocyanate-terminated prepolymers may also be employed in the preparation of the foams and elastomers of the present invention. Prepolymers may be prepared by reacting an excess of organic polyisocyanate or mixtures thereof with a minor amount of an active hydrogen-containing compound as determined by the well-known Zerewitinoff test, as described by Kohler in "Journal of the American Chemical Society," 49, 3181(1927). These compounds and their methods of preparation are well known to those skilled in the art. The use of any one specific active hydrogen compound is not critical; any such compound can be employed in the practice of the present invention.

The inventive alkoxylated vegetable oil hydroxylate may partially or wholly replace the petroleum-derived polyol that would typically be used in producing a polyurethane. The preferred vegetable oil starter molecule employed to produce the inventive alkoxylated vegetable oil hydroxylate is soybean oil, although the inventors herein contemplate that virtually any other vegetable oil, such as sunflower, canola, linseed, cottonseed, tung, palm, poppy seed, corn and peanut oil may be hydroxylated and used in accordance with the present invention.

By hydroxylated, the inventors herein mean the introduction and/or increase in the number of hydroxyl (i.e., OH) groups in the molecule. In the present invention, the vegetable oil may be hydroxylated by any method in the art, including but not limited to, air oxidation, the use of peroxides and by hydroformylation.

Following this hydroxylation, the vegetable oil hydroxylate may be alkoxylated by any method known to those skilled in the art. Particularly preferred methods are basic (e.g. KOH) catalyzed processes and double metal cyanide (DMC) catalyzed processes.

The alkylene oxides useful in the inventive alkoxylation process include, but are not limited to, ethylene oxide, propylene oxide, 1,2- and 2,3-butylene oxide, isobutylene oxide, epichlorohydrin, cyclohexene oxide, styrene oxide, and the higher alkylene oxides such as the C₅-C₃₀ α-alkylene oxides. It is generally undesirable to employ ethylene oxide alone, but mixtures of propylene oxide and ethylene oxide with high ethylene oxide content, i.e. up to 85 mole percent, may be used effectively. Propylene oxide or mixtures of propylene oxide with ethylene oxide or another alkylene oxide are preferred for the instantly claimed process. Other polymerizable monomers may be used as well, e.g. polycarboxylic anhydrides (phthalic anhydride, trimellitic anhydride, pyromellitic anhydride, methylendomethylene tetrahydrophthalic anhydride, endomethylene tetrahydrophthalic anhydride, chlorendic anhydride and maleic anhydride) lactones and other monomers as disclosed in U.S. Pat. Nos. 3,404,109; 5,145,883; and 3,538,043. The inventive alkoxylated vegetable oil hydroxylate may optionally be "capped" with ethylene oxide, as known in the art and disclosed e.g., in U.S. Pat. Nos. 4,355, 188; 4,721,818; and 5,563,221.

The alkoxylated vegetable oil hydroxylate preferably has an alkoxylate content of from 15 wt.% to 90 wt.%, more preferably from 20 wt.% to 80 wt.%, based on the weight of the alkoxylated vegetable oil hydroxylate. The alkoxylate content of the inventive alkoxylated vegetable oil hydroxylate may be in an amount ranging between any combination of these values, inclusive of the recited values.

As mentioned above, the alkoxylation of the vegetable oil hydroxylate may be catalyzed by any alkoxylation catalyst known in the art, but double metal cyanide (DMC) catalysts are particularly preferred in the present invention because the resulting polyol will have a higher molecular weight which offers improved comfort in the resultant foam or elastomer. The alkoxylation process of the present invention may employ any double metal cyanide (DMC) catalyst. Suitable double metal cyanide (DMC) catalysts are known to those skilled in the art. Double metal cyanide complex (DMC) catalysts are non-stoichiometric complexes of a low molecular weight organic complexing agent and optionally other complexing agents with a double metal cyanide salt, e.g. zinc hexacyanocobaltate.

Exemplary double metal cyanide (DMC) complex catalysts for use in the inventive vegetable oil hydroxylate alkoxylation process include those suitable for preparation of low unsaturation polyoxyalkylene polyether polyols, such as disclosed in U.S. Pat. Nos. 3,427,256; 3,427,334; 3,427,335; 3,829,505; 4,472,560; 4,477,589; and 5,158,922. The double metal cyanide (DMC) catalysts more preferred in the processes of the present invention are those capable of preparing "ultra-low" unsaturation polyether polyols. Such catalysts are disclosed in U.S. Pat. Nos. 5,470,813 and 5,482,908, and 5,545,601, the entire contents of which are herein incorporated by reference thereto. Particularly preferred in the process of the present invention are those zinc hexacyanocobaltate catalysts prepared by the methods described in U.S. Pat. No. 5,482,908.

The DMC catalyst concentration is chosen to ensure a good control of the polyoxyalkylation reaction under the given reaction conditions. The catalyst concentration is preferably in the range from 0.0005 wt.% to 1 wt.%, more preferably in the range from 0.001 wt.% to 0.1 wt.%, most preferably in the range from 0.001 to 0.01 wt.%, based on the amount of polyol to be produced. The DMC catalyst may be present in the alkoxylation process of the present invention in an amount ranging between any combination of these values, inclusive of the recited values.

As those skilled in the art are aware, an organic complexing ligand may be included with the DMC catalyst. Any organic complexing ligand may be part of the DMC catalyst in the process of the present invention, such as the organic complexing ligands described in U.S. Pat. Nos. 3,404,109, 3,829,505, 3,941,849, 5,158,922 and 5,470,813, as well as in EP 0,700,949, EP 0,761,708, EP 0,743,093, WO 97/40086 and JP 4,145,123. Such organic complexing ligands include water-soluble organic compounds with heteroatoms, such as oxygen, nitrogen, phosphorus or sulfur, which can form complexes with the DMC compound. Preferred as organic complexing ligands, are alcohols, aldehydes, ketones, ethers, esters, amides, ureas, nitriles, sulfides and mixtures thereof. More preferred organic complexing ligands include water-soluble aliphatic alcohols, such as, for example, ethanol, isopropanol, n-butanol, isobutanol, sec-butanol and tert-butanol. Tert-butanol is most preferred.

The DMC catalysts in the process of the present invention may optionally contain at least one functionalized polymer. "Functionalized polymer" as used herein is a polymer or its salt that contains one or more functional groups including oxygen, nitrogen, sulfur, phosphorus or halogen. Examples of functionalized polymers preferred in the inventive process include, but are not limited to, polyethers, polyesters, polycarbonates, polyalkylene glycol sorbitan esters, polyalkylene glycol glycidyl ethers, polyacrylamides, poly(acrylamide-co-acrylic acids), polyacrylic acids, poly(acrylic acid-co- maleic acids), poly(N-vinylpyrrolidone-co-acrylic acids), poly(acrylic acid- co-styrenes) and the salts thereof, maleic acids, styrenes and maleic anhydride copolymers and the salts thereof, block copolymers composed of branched chain ethoxylated alcohols, alkoxylated alcohols such as NEODOL (sold commercially by Shell Chemical Company), polyether, polyacrylonitriles, polyalkyl acrylates, polyalkyl methacrylates, polyvinyl methyl ethers, polyvinyl ethyl ethers, polyvinyl acetates, polyvinyl alcohols, poly-N-vinylpyrrolidones, polyvinyl methyl ketones, poly(4-vinylphenols), oxazoline polymers, polyalkyleneimines, hydroxyethylcelluloses, polyacetals, glycidyl ethers, glycosides, carboxylic acid esters of polyhydric alcohols, bile acids and their salts, esters or amides, cyclodextrins, phosphorus compounds, unsaturated carboxylic acid esters and ionic surface- or interface-active compounds. Polyether polyols are most preferably used as the functionalized polymer in the inventive alkoxylation process.

Where used, functionalized polymers may be present in the DMC catalyst in an amount of from 2 to 80 wt.%, preferably, from 5 to 70 wt.%, more preferably, from 10 to 60 wt.%, based on the total weight of DMC catalyst. The functionalized polymers may be present in the DMC catalyst in an amount ranging between any combination of these values, inclusive of the recited values. In addition, a catalyst polyol suspension, such as described in U.S. Pat. No. 6,699,961, may be used.

The inventive process for alkoxylating the vegetable oil hydroxylate may be batch, semi-batch or continuous. In batch or semi-batch processes for producing polyols, high molecular weight starter compounds and catalysts are charged to a reactor all at once. A number of workers have patented continuous processes for producing polyols.

U.S. Pat. No. 5,689,012, issued to Pazos et al., the contents of which are incorporated by reference, discloses a continuous process for the preparation of polyoxyalkylene polyethers using double metal cyanide (DMC) catalysts as the polyoxyalkylation catalyst and employing continuous addition of alkylene oxide in conjunction with continuous addition of starter and catalyst to a continuous oxyalkylation reactor. The polyether products are said to be exceptionally well suited for use in polymer forming systems, particularly polyurethanes. In the process of Pazos et al., polyol synthesis begins with introduction of catalyst/starter into the continuous reactor, initiation of oxyalkylation, and while oxyalkylation progresses, continuous addition of catalyst, starter and alkylene oxide with continuous removal of polyol product. The process of Pazos et al. adds "fresh" catalyst or pre-activated catalyst.

The term "continuous" as used herein may be defined as a mode of addition of a relevant catalyst or reactant in such manner so as to maintain an effective concentration of the catalyst or reactant substantially continuously. Catalyst input, for example, may be truly continuous, or may be in relatively closely spaced increments. Likewise, continuous starter addition may be truly continuous, or may be incremental. It would not detract from the present polyol production process to incrementally add a catalyst or reactant in such a manner that the added material's concentration decreases to a very low level (5-10 ppm) for some time prior to the next incremental addition. However, it is preferable that catalyst concentration be maintained at substantially the same level during the majority of the course of the continuous reaction, and that low molecular weight starter be present during the majority of the process. Incremental addition of catalyst and/or reactant which does not substantially affect the nature of the product is still "continuous" as that term is used herein.

The inventive alkoxylated vegetable oil hydroxylates preferably have a nominal functionality in the range of 1.5 to 6, more preferably 2 to 4 and a molecular weight in the range of 300 to 10,000, more preferably from 500 to 7,000 Da. The alkoxylated vegetable oil hydroxylates of the present invention may have a functionality and molecular weight in an amount ranging between any combination of these values, inclusive of the recited values.

The inventive polyurethane forming formulation may optionally include one or more non-vegetable oil-based (i.e., petrochemically derived) polyols such as polyethers, polyesters, polyacetals, polycarbonates, polyesterethers, polyester carbonates, polythioethers, polyamides, polyesteramides, polysiloxanes, polybutadienes and polyacetones. The optional non-vegetable oil-based polyol may preferably be made in the presence of double metal cyanide (DMC) catalysts.

Suitable additives which may optionally be included in the polyurethane forming formulations of the present invention include, for example, foam stabilizers, catalysts, cell regulators, reaction inhibitors, flame retardants, plasticizers, pigments, fillers, etc.

Foam stabilizers which may be considered suitable for use in the inventive process include, for example, polyether siloxanes, and preferably those which are insoluble in water. Compounds such as these are generally of such a structure that copolymers of ethylene oxide and propylene oxide are attached to a polydimethylsiloxane residue. Such foam stabilizers are described in, for example, U.S. Pat. Nos. 2,834,748, 2,917,480 and 3,629,308.

Catalysts suitable for the foam or elastomer forming process of the present invention include those which are known in the art. These catalysts include, for example, tertiary amines, such as triethylamine, tributylamine, N-methylmorpholine, N-ethylmorpholine, N,N,N',N'-tetramethylethylenediamine, pentamethyl-diethylenetriamine and higher homologues (as described in, for example, DE-A 2,624,527 and 2,624,528), 1,4-diazabicyclo(2.2.2)octane, N-methyl-N'-dimethylaminoethylpiperazine, bis-(dimethylaminoalkyl)piperazines, N,N-dimethylbenzylamine, N,N-dimethylcyclohexylamine, N,N-diethyl-benzylamine, bis-(N,N-diethylaminoethyl) adipate, N,N,N',N'-tetramethyl-1,3-butanediamine, N,N-dimethyl-β-phenylethylamine, 1,2-dimethylimidazole, 2-methylimidazole, monocyclic and bicyclic amines together with bis-(dialkylamino)alkyl ethers, such as 2,2-bis-(dimethylaminoethyl) ether.

Other suitable catalysts which may be used in producing the inventive polyurethane foams and elastomers include, for example, organometallic compounds, and particularly, organotin compounds. Organotin compounds which may be considered suitable include those organotin compounds containing sulfur. Such catalysts include, for example, di-n-octyltin mercaptide. Other types of suitable organotin catalysts include, preferably tin(II) salts of carboxylic acids such as, for example, tin(II) acetate, tin(II) octoate, tin(II) ethylhexoate and/or tin(II) laurate, and tin(IV) compounds such as, for example, dibutyltin oxide, dibutyltin dichloride, dibutyltin diacetate, dibutyltin dilaurate, dibutyltin maleate and/or dioctyltin diacetate.

Further examples of suitable additives, which may optionally be included in the flexible polyurethane foams of the present invention can be found in Kunststoff-Handbuch, volume VII, edited by Vieweg & Hochtlen, Carl Hanser Verlag, Munich 1993, 3rd Ed., pp. 104 to 127, for example. The relevant details concerning the use and mode of action of these additives are set forth therein.

### EXAMPLES

The present invention is further illustrated, but is not to be limited, by the following examples in which all quantities given in "parts" and "percents" are understood to be by weight, unless otherwise indicated.

### Propoxylated Blown-Soybean Oil - Polyol A

A two-gallon pressure reactor equipped with internal heat exchanger, three feed streams and computer process control was used to alkoxylate hydroxylated soybean oil. The reactor was evacuated and heated to 130°C. The reactor was charged with a 1:1 mixture of blown (hydroxylated) soybean oil and toluene (60 g) and double metal cyanide catalyst as described in U.S. Pat. No. 5,482,908 (200 ppm based on the final polyol weight). Blown soybean oil was produced by Urethane Soy Systems in a controlled process in which air was blown though the oil at an elevated temperature. This procedure introduced hydroxyl groups into the fatty acid groups. The blown soybean oil had a hydroxyl number of 267.

The catalyst was activated with about 10 percent propylene oxide based on the initial charge of toluene and hydroxylated soybean oil (i.e., a total of 75 g of propylene oxide to activate the catalyst). After activation, a 1:1 mixture of hydroxylated soybean oil and toluene (1,140 g) in one feed stream was added over a period of six hours and propylene oxide (1,140 g) in a second feed stream over eight hours at a temperature at 130°C.

The reactor was stripped at 130°C to remove toluene and excess propylene oxide and the contents cooled to 80°C and labeled Polyol A. Analysis: OH No. = 56.

### Propoxylated Blown-Soybean Oil - Polyol B

The general process and equipment described above to make Polyol A were used with some modifications to make Polyol B. The initial charge to the reactor was a 700 MW propoxylated glycerin (100 g) followed by the catalyst (0.743 g). After evacuating and purging the system with nitrogen, propylene oxide (50 g) was charged to activate the catalyst. Hydroxylated soybean oil mixed with toluene at a 1:1 ratio (1,600 g) was charged over a 2.5 hour period along with propylene oxide (1,964 g) which was charged over a 3.3 hour period. After the addition was complete, the temperature was increased from 130°C to 150°C to complete the propylene oxide reaction. The system was then stripped to remove toluene. A 78 hydroxyl number product was obtained and labeled Polyol B.

Additional polyols B-1 and B-2 were made with hydroxylated soybean oil using the above procedure with the exception shown below; the exception being that a small of amount of a 700 MW propoxylated glycerin was used to starter to activate the catalyst prior to the addition of the soybean oil dissolved in toluene as a co-feed with propylene oxide. All runs were conducted at 130°C with the final stripping to remove toluene at 150°C.

| | Polyol B-1 | Polyol B-2 |
|---|---|---|
| Starter (240 OH No. propoxylated glycerin) | 100 g | 100 g |
| Toluene | 400 g | 400 g |
| Propylene Oxide for Activation | 50 g | 50 g |
| 1:1 Toluene and Soybean Oil OH No. 174 | 1,400 g | - |
| 1:1 Toluene and Soybean Oil OH No. 294 | - | 2,220 g |
| Propylene Oxide Feed | 1,754 g | 2,921 g |
| Feed Time | 2 hrs. | 2 hrs. |
| Target OH No. | 56 | 56 |

### Propoxylated-Ethoxylated Blown-Soybean Oil - Polyol C

A solution was prepared from toluene (2,000 g), a hydroxylated soybean oil having a hydroxyl number of 179 and a functionality of 3, available from Urethane Soy Systems as GC-5N (2,000 g), and concentrated phosphoric acid (1 g). This solution was charged into a two-gallon vessel (Pope Scientific Inc.) and pressurized with 50 psia nitrogen in preparation to feed into a two-gallon reactor.

A two-gallon stainless steel polyol reactor was charged with a glycerin started 36 hydroxyl number polyether triol containing a 20 wt.% ethylene oxide tip (500 g; 0.321 OH eq.) and 1.088 g of double metal cyanide catalyst (as described in U.S. Pat. No. 5,482,908). The mixture was heated to 130°C under vacuum with stirring and a slow purge of nitrogen sufficient to maintain a pressure of 1.0 psia in the reactor. After 30 minutes of purging/stripping, the nitrogen purge was stopped and the vacuum valve closed, thus blocking the reactor under vacuum ∼0.3 psia). Propylene oxide (50 g) was pumped into the closed reactor over five minutes. The pressure in the reactor rose to 23.4 psia following this addition. The pressure quickly began to drop, and at six minutes after the propylene oxide addition, it had reached 3.5 psia indicating activation of the DMC catalyst. A mixed feed of propylene oxide (90 g) and ethylene oxide (10 g) was added at the rate of 9.5 and 1 g/min. respectively, without leading to an increase in reactor pressure ― indicating the catalyst was activated. While continuing to feed the ethylene oxide and propylene oxide at the same rates, a third feed stream containing the solution of hydroxylated soybean oil in toluene described above was started at the rate of 11 g/min. After one hour, the rate of the hydroxylated soybean oil feed was raised to 16.7 g/min. and continued at this rate until a total of 1,880 g of the solution (3.0 OH eq.) were fed. The oxide feeds were continued at the same rate until a total of 1,355 g of propylene oxide and 155 g of ethylene oxide were fed. The ethylene oxide feed rate was raised to 6.3 g/min. and the propylene oxide feed rate was held at 9.5 g/min. as additional ethylene oxide (600 g) and propylene oxide (900 g) were fed to the reactor.

At the end of the oxide feed, the pressure in the reactor was -30 psia. After both ethylene oxide and propylene oxide feeds were stopped, the pressure dropped -3 psia over three minutes to 27 psia, where it remained constant during the 30 minute cookout at 130°C. The mixture was subsequently cooled to 80°C, and the vacuum valve was slowly opened to begin stripping the toluene. When toluene could no longer be seen distilling into the vacuum line cold trap, the temperature was increased to 130°C and held there under full vacuum with a nitrogen purge for an additional 30 minutes. The product drained from the reactor was an orange colored liquid having a hydroxyl number of 45.7 and a kinematic viscosity of 1,117 cSt.

### Propoxylated-Ethoxylated Blown-Soybean Oil - Polyol D

A two-gallon stainless steel polyol reactor was charged with Polyol C (500 g) and double metal cyanide catalyst (1.088 g) (as described in U.S. Pat. No. 5,482,908). The mixture was heated to 130°C under vacuum with stirring and a slow purge of nitrogen sufficient to maintain a pressure of 1.0 psia in the reactor. After 30 minutes of purging/stripping, the nitrogen purge was stopped and the vacuum valve closed, thus blocking the reactor under vacuum -0.3 psia. Propylene oxide (50 g) was pumped into the closed reactor over five minutes. The pressure in the reactor rose to 25.1 psia following this addition. The pressure quickly began to drop, and at four minutes after the propylene oxide addition, it had reached 5.0 psia indicating activation of the DMC catalyst. A mixed feed of propylene oxide (90 g) and ethylene oxide (10 g) was added at the rate of 9.5 and 1 g/min. respectively, without leading to an increase in reactor pressure - indicating the catalyst was activated. While continuing to feed the ethylene oxide and propylene oxide at the same rates, a third feed stream containing the solution of hydroxylated soybean oil in toluene (described above in the preparation of Polyol C) was started at the rate of 5 g/min., and increased in a linear manner to 20 g/min. over 40 minutes. The soybean oil feed was continued at this rate until a total of 1,880 g of the solution (3.0 OH eq.) were fed. The oxide feeds were continued at the same rate until a total of 1,355 g of propylene oxide and 155 g of ethylene oxide were fed. Then, the ethylene oxide feed rate was raised to 6.3 g/min. while the propylene oxide feed rate was held at 9.5 g/min. as additional ethylene oxide (600 g) and propylene oxide (900 g) were fed to the reactor.

At the end of the oxide feed, the pressure in the reactor was -28 psia. After both ethylene oxide and propylene oxide feeds were stopped, the pressure dropped -4 psia over five minutes to -24 psia, where it remained constant during the 30 minute cookout at 130°C. The mixture was subsequently cooled to 80°C, and the vacuum valve was slowly opened to begin stripping the toluene. When toluene could no longer be seen distilling into the vacuum line cold trap, the temperature was increased to 130°C and held there under full vacuum with a nitrogen purge for an additional 30 minutes. The product drained from the reactor was an orange colored liquid having a hydroxyl number of 42.6 and a kinematic viscosity of 1,353 cSt.

Foams were made using the following components:
- Polyol A: a propoxylated soybean oil hydroxylate having a hydroxyl number of about 56 mg KOH/g, which was produced according to the process described above;
- Polyol B: a propoxylated soybean oil hydroxylate having a hydroxyl number of about 78 mg KOH/g, which was produced according to the process described above;
- Polyol D: a propoxylated soybean oil hydroxylate having a hydroxyl number of about 42.6 mg KOH/g, which was produced according to the process described above;
- Polyol E: a triol having a hydroxyl number of about 56 mg KOH/g;
- MeCl₂: methylene chloride;
- Surfactant A: a silicone surfactant available as NIAX L 620 from GE Silicones;
- Surfactant B: a silicone surfactant available as TEGOSTAB B-8715 LF from Goldschmidt AG;
- Surfactant C: a silicone surfactant available as DABCO 5943 from Air Products;
- DEOA: 85/15 mixture of diethanolamine and water;
- Catalyst A: di-(2-ethylhexyl)phthalate/stannous alkyl hexoate in a ratio of 50/50 catalyst, available as DABCO T-10 from Air Products;
- Catalyst B: an amine catalyst available as NIAX A-1 from GE Silicones;
- Catalyst C: an amine catalyst available as DABCO 33-LV from Air Products;
- Catalyst D: an amine catalyst available as NIAX A-4 available from GE Silicones;
- Catalyst E: a delayed action amine catalyst available as NIAX A-300 from GE Silicones;
- Isocyanate A: toluene diisocyanate, available as MONDUR TD-80 from Bayer MaterialScience; and
- Isocyanate B: a polymeric diphenylmethane diisocyanate (PMDI) having an NCO group content of about 32.4, a functionality of about 2.3 and a viscosity of about 25 mPa·s at 25°C.

The components were combined in the amounts (in parts) given below in Table I and reacted at an isocyanate index (100 A/B) of 110. Physical properties of the resultant free-rise foams were determined and are also summarized in Table I. As is readily apparent by reference to Table I, the inventive foam forming formulations with alkoxylated soybean oil hydroxylate produced usable foams.

**Table I**

| **Component (php)** | **C-1** | **Ex. 2** | **C-3** | **Ex. 4** |
|---|---|---|---|---|
| Polyol E | 100 | 50 | 100 | 50 |
| Polyol A | 0 | 50 | - | - |
| Polyol B | - | . - | 0 | 50 |
| MeCl₂ | 11.3 | 11.3 | 11.3 | 11.3 |
| Water | 4.5 | 4.5 | 4.5 | 4.5 |
| Surfactant A | 0.9 | 1.1 | 0.9 | 1.1 |
| Catalyst A | 0.75 | 0.9 | 0.75 | 0.9 |
| Catalyst B | 0.1 | 0.1 | - | - |
| Isocyanate A | 57.4 | 57.4 | 54.7 | 59.3 |

| **Physical Characteristics** | | | | |
|---|---|---|---|---|
| Density (lb/ft³) | 0.95 | 0.94 | 0.91 | 0.96 |
| Air Flow (ft³/min) | 3.45 | 4.22 | 4.79 | 4.55 |
| IFD 25% (lb/50in²) | 21.0 | 21.0 | 17.3 | 18 |
| IFD 65% (lb/50in²) | 38.30 | 35.30 | 28.5 | 30.8 |
| IFD 25% Return (lb/50in²) | 15.0 | 15.0 | 12.0 | 12.8 |
| Percent recovery | 71.4 | 71.4 | 69.6 | 71.1 |
| Comfort factor | 1.8 | 1.7 | 1.7 | 1.7 |
| Tensile strength (psi) | 11.68 | 10.12 | 12.32 | 12.68 |
| Elongation (%) | 128.9 | 97.8 | 193.4 | 104.6 |
| Tear Strength (pli) | 2.21 | 1.31 | 1.9 | 1.3 |
| Compression Set. 90% (%) | 62.2 | 14.5 | 47.9 | 16.7 |

Components were combined in the amounts (in parts) given below in Table II and reacted at an isocyanate index (100 A/B) of 110. Physical properties of the resulting free-rise foams were determined and are summarized below in Table II.

**Table II**

| **Component (php)** | **Ex. 5** | **Ex. 6** | **Ex. 7** |
|---|---|---|---|
| Polyol E | 50 | 50 | 50 |
| Polyol B | 50 | 50 | 50 |
| Water | 4.50 | 4.50 | 4.50 |
| MeCl₂ | 11.30 | 11.30 | 11.3 |
| Catalyst A | 0.10 | 0.10 | 0.10 |
| Surfactant A | 1.3 | 1.20 | 1.10 |
| Isocyanate A | 59.3 | 59.3 | 59.3 |
| | | | |
| Density (lb/ft³) | 0.91 | 0.91 | 0.91 |
| Air Flow (ft³/min) | 3.4 | 4.2 | 4.9 |
| Observations | Open | Open | Good |

Components were combined in the amounts (in parts) given below in Table III and reacted at the isocyanate index (100 A/B) in a closed mold. Physical properties of the molded foams were determined and are presented below in Table III.

**Table III**

| **Component (php)** | **Ex. 8** | **Ex. 9** | **Ex.10** | **Ex.11** |
|---|---|---|---|---|
| Polyol D | 100 | 100 | 100 | 100 |
| Water | 3.29 | 3.29 | 3.29 | 3.29 |
| DEOA | 0.412 | 0.412 | 0.412 | 0.412 |
| Surfactant B | 1.38 | 1.38 | 1.38 | 1.38 |
| Surfactant C | 0.06 | 0.12 | 0.12 | 0.12 |
| Catalyst B | 0.17 | 0.17 | 0.17 | 0.17 |
| Catalyst C | 0.75 | - | - | - |
| Catalyst D | 0.5 | 0.5 | 0.5 | 0.5 |
| Catalyst E | - | 0.75 | 0.75 | 0.75 |
| Isocyanate B | 60.37 | 64.46 | 51.57 | 58.02 |
| Index | 100 | 100 | 80 | 90 |
| | | | | |
| Part Density (lb/ft³) | 2.74 | 2.82 | 2.70 | 2.87 |
| Observations | | | vent collapse | |

The polyurethane foams and elastomers of the present invention may find use in numerous applications where environmental concerns are heightened, where a percentage of renewable resource content is required, and/or where increased hydrophobicity is advantageous. The inventors herein contemplate that such situations may include, but are not limited to, automobile interior parts such as dashboards, seating cushions and headrests; polyurethane structural foams; floor coatings; and athletic running tracks.

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A polyurethane foam or elastomer comprising the reaction product of:
at least one polyisocyanate; and
at least one alkoxylated vegetable oil hydroxylate containing from about 15 wt.% to about 90 wt.% alkoxylate, based on the weight of the alkoxylated vegetable oil hydroxylate,
optionally, at least one non-vegetable oil-based polyol,
optionally in the presence of at least one of blowing agents, surfactants, pigments, flame retardants, catalysts and fillers.

2. The polyurethane foam or elastomer according to Claim 1, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3- and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), naphthylene-1,5-diisocyanate, triphenyl-methane-4,4',4"-triisocyanate, polyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret-containing polyisocyanates, isocyanate-terminated prepolymers and mixtures thereof.

3. The polyurethane foam or elastomer according to Claim 1, wherein the at least one polyisocyanate is toluene diisocyanate (TDI).

4. The polyurethane foam or elastomer according to Claim 1, wherein the vegetable oil is chosen from sunflower oil, canola oil, linseed oil, cottonseed oil, tung oil, palm oil, poppy seed oil, corn oil, peanut oil and soybean oil.

5. The polyurethane foam or elastomer according to Claim 1, wherein the vegetable oil is soybean oil.

6. The polyurethane foam or elastomer according to Claim 1, wherein the alkoxylated vegetable oil hydroxylate contains from about 20 wt.% to about 80 wt.% alkoxylate, based on the weight of the alkoxylated vegetable oil hydroxylate.

7. The polyurethane foam or elastomer according to Claim 1, wherein the vegetable oil hydroxylate is alkoxylated in the presence of a double metal cyanide (DMC) catalyst.

8. The polyurethane foam or elastomer according to Claim 1, wherein the vegetable oil hydroxylate is alkoxylated with an alkylene oxide chosen from ethylene oxide, propylene oxide, 1,2-butylene oxide, 2,3-butylene oxide, isobutylene oxide, epichlorohydrin, cyclohexene oxide, styrene oxide, C₅-C₃₀ α-alkylene oxides, polycarboxylic anhydrides, lactones and mixtures thereof.

9. The polyurethane foam or elastomer according to Claim 1, wherein the alkoxylated vegetable oil hydroxylate is capped with ethylene oxide.

10. The polyurethane foam or elastomer according to Claim 1, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

11. The polyurethane foam or elastomer according to Claim 1, wherein the non-vegetable oil-based polyol is a polyether polyol.

12. The polyurethane foam or elastomer according to Claim 11, wherein the polyether polyol is made in the presence of a double metal cyanide (DMC) catalyst.

13. One of an automobile interior part, a polyurethane structural foam, a floor coating and an athletic running track comprising the polyurethane foam or elastomer according to Claim 1.

14. A process for making a polyurethane foam or elastomer comprising reacting:
at least one polyisocyanate; and
at least one alkoxylated vegetable oil hydroxylate containing from about 15 wt.% to about 90 wt.% alkoxylate, based on the weight of the alkoxylated vegetable oil hydroxylate,
optionally, at least one non-vegetable oil-based polyol,
optionally in the presence of at least one of blowing agents, surfactants, pigments, flame retardants, catalysts and fillers.

15. The process according to Claim 14, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), naphthylene-1,5-diisocyanate, triphenyl-methane-4,4',4"-triisocyanate, polyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret-containing polyisocyanates, isocyanate-terminated prepolymers and mixtures thereof.

16. The process according to Claim 14, wherein the at least one polyisocyanate is toluene diisocyanate (TDI).

17. The process according to Claim 14, wherein the vegetable oil is chosen from sunflower oil, canola oil, linseed oil, cottonseed oil, tung oil, palm oil, poppy seed oil, corn oil, peanut oil and soybean oil.

18. The process according to Claim 14, wherein the vegetable oil is soybean oil.

19. The process according to Claim 14, wherein the vegetable oil hydroxylate is alkoxylated in the presence of a double metal cyanide (DMC) catalyst.

20. The process according to Claim 14, wherein the vegetable oil hydroxylate is alkoxylated with an alkylene oxide chosen from ethylene oxide, propylene oxide, 1,2-butylene oxide, 2,3-butylene oxide, isobutylene oxide, epichlorohydrin, cyclohexene oxide, styrene oxide, C₅-C₃₀ α-alkylene oxides, polycarboxylic anhydrides, lactones and mixtures thereof.

21. The process according to Claim 14, wherein the alkoxylated vegetable oil hydroxylate is capped with ethylene oxide.

22. The process according to Claim 14, wherein the alkoxylated vegetable oil hydroxylate contains from about 20 wt.% to about 80 wt.% alkoxylate, based on the weight of the alkoxylated vegetable oil hydroxylate.

23. The process according to Claim 14, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

24. The process according to Claim 14, wherein the non-vegetable oil-based polyol is a polyether polyol.

25. The process according to Claim 14, wherein the non-vegetable oil-based polyol is made in the presence of a double metal cyanide (DMC) catalyst.

26. The process according to Claim 25, wherein the double metal cyanide (DMC) catalyst is a zinc hexacyanocobaltate.

27. One of an automobile interior part, a polyurethane structural foam, a floor coating and an athletic running track comprising the polyurethane foam or elastomer made by the process according to Claim 14.

28. A polyurethane foam or elastomer comprising the reaction product of:
at least one polyisocyanate; and
at least one alkoxylated vegetable oil hydroxylate containing from about 15 wt.% to about 90 wt.% alkoxylate, based on the weight of the alkoxylated vegetable oil hydroxylate, and alkoxylated in the presence of a double metal cyanide (DMC) catalyst,
optionally, at least one non-vegetable oil-based polyol,
optionally in the presence of at least one of blowing agents, surfactants, pigments, flame retardants, catalysts and fillers.

29. The polyurethane foam or elastomer according to Claim 28, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3- and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), naphthylene-1,5-diisocyanate, triphenyl-methane-4,4',4"-triisocyanate, polyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret-containing polyisocyanates, isocyanate-terminated prepolymers and mixtures thereof.

30. The polyurethane foam or elastomer according to Claim 28, wherein the at least one polyisocyanate is toluene diisocyanate (TDI).

31. The polyurethane foam or elastomer according to Claim 28, wherein the vegetable oil is chosen from sunflower oil, canola oil, linseed oil, cottonseed oil, tung oil, palm oil, poppy seed oil, corn oil, peanut oil and soybean oil.

32. The polyurethane foam or elastomer according to Claim 28, wherein the vegetable oil is soybean oil.

33. The polyurethane foam or elastomer according to Claim 28, wherein the alkoxylated vegetable oil hydroxylate contains from about 20 wt.% to about 80 wt.% alkoxylate, based on the weight of the alkoxylated vegetable oil hydroxylate.

34. The polyurethane foam or elastomer according to Claim 28, wherein the vegetable oil hydroxylate is alkoxylated with an alkylene oxide chosen from ethylene oxide, propylene oxide, 1,2-butylene oxide, 2,3-butylene oxide, isobutylene oxide, epichlorohydrin, cyclohexene oxide, styrene oxide, C₅-C₃₀ α-alkylene oxides, polycarboxylic anhydrides, lactones and mixtures thereof.

35. The polyurethane foam or elastomer according to Claim 28, wherein the alkoxylated vegetable oil hydroxylate is capped with ethylene oxide.

36. The polyurethane foam or elastomer according to Claim 28, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

37. The polyurethane foam or elastomer according to Claim 28, wherein the non-vegetable oil-based polyol is a polyether polyol.

38. The polyurethane foam or elastomer according to Claim 37, wherein the polyether polyol is made in the presence of a double metal cyanide (DMC) catalyst.

39. One of an automobile interior part, a polyurethane structural foam, a floor coating and an athletic running track comprising the polyurethane foam or elastomer according to Claim 28.

40. A process for making a polyurethane foam or elastomer comprising reacting:
at least one polyisocyanate; and
at least one alkoxylated vegetable oil hydroxylate containing from about 15 wt.% to about 90 wt.% alkoxylate, based on the weight of the alkoxylated vegetable oil hydroxylate, and alkoxylated in the presence of a double metal cyanide (DMC) catalyst,
optionally, at least one non-vegetable oil-based polyol,
optionally in the presence of at least one of blowing agents, surfactants, pigments, flame retardants, catalysts and fillers.

41. The process according to Claim 40, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), naphthylene-1,5-diisocyanate, triphenyl-methane-4,4',4"-triisocyanate, polyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret-containing polyisocyanates, isocyanate-terminated prepolymers and mixtures thereof.

42. The process according to Claim 40, wherein the at least one polyisocyanate is toluene diisocyanate (TDI).

43. The process according to Claim 40, wherein the vegetable oil is chosen from sunflower oil, canola oil, linseed oil, cottonseed oil, tung oil, palm oil, poppy seed oil, corn oil, peanut oil and soybean oil.

44. The process according to Claim 40, wherein the vegetable oil is soybean oil.

45. The process according to Claim 40, wherein the vegetable oil hydroxylate is alkoxylated with an alkylene oxide chosen from ethylene oxide, propylene oxide, 1,2-butylene oxide, 2,3-butylene oxide, isobutylene oxide, epichlorohydrin, cyclohexene oxide, styrene oxide, C₅-C₃₀ α-alkylene oxides, polycarboxylic anhydrides, lactones and mixtures thereof.

46. The process according to Claim 40, wherein the alkoxylated vegetable oil hydroxylate is capped with ethylene oxide.

47. The process according to Claim 40, wherein the alkoxylated vegetable oil hydroxylate contains from about 20 wt.% to about 80 wt.% alkoxylate, based on the weight of the alkoxylated vegetable oil hydroxylate.

48. The process according to Claim 40, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

49. The process according to Claim 40, wherein the non-vegetable oil-based polyol is a polyether polyol.

50. The process according to Claim 40, wherein the non-vegetable oil-based polyol is made in the presence of a double metal cyanide (DMC) catalyst.

51. The process according to Claim 50, wherein the double metal cyanide (DMC) catalyst is a zinc hexacyanocobaltate.

52. One of an automobile interior part, a polyurethane structural foam, a floor coating and an athletic running track comprising the polyurethane foam or elastomer made by the process according to Claim 40.

53. A continuous process for the preparation of an alkoxylated vegetable oil hydroxylate comprising:
a) establishing in a continuous reactor a first portion of a mixture of a double metal cyanide (DMC) catalyst and hydroxylated vegetable oil effective to initiate polyoxyalkylation of the hydroxylated vegetable oil after introduction of alkylene oxide into the continuous reactor;
b) continuously introducing into the continuous reactor one or more alkylene oxides;
c) continuously introducing into the continuous reactor hydroxylated vegetable oil;
d) continuously introducing into the reactor fresh double metal cyanide (DMC) catalyst and/or further double metal cyanide (DMC) catalyst/further hydroxylated vegetable oil mixture such that the catalytic activity is maintained;
e) polyoxyalkylating the hydroxylated vegetable oil by continuously repeating at least steps a) through d) to produce an alkoxylated vegetable oil hydroxylate; and
f) continuously removing the alkoxylated vegetable oil hydroxylate from the continuous reactor.

54. The continuous process according to Claim 53, wherein the vegetable oil is chosen from sunflower oil, canola oil, linseed oil, cottonseed oil, tung oil, palm oil, poppy seed oil, corn oil, peanut oil and soybean oil.

55. The continuous process according to Claim 53, wherein the vegetable oil is soybean oil.

56. The continuous process according to Claim 53, wherein the double metal cyanide (DMC) catalyst is a zinc hexacyanocobaltate.

57. The continuous process according to Claim 53, wherein the alkylene oxide is chosen from ethylene oxide, propylene oxide, 1,2-butylene oxide, 2,3-butylene oxide, isobutylene oxide, epichlorohydrin, cyclohexene oxide, styrene oxide, C₅-C₃₀ α-alkylene oxides, polycarboxylic anhydrides, lactones and mixtures thereof.

58. The continuous process according to Claim 53, wherein the alkylene oxide is propylene oxide.

59. The continuous process according to Claim 53, further including a step of capping the alkoxylated vegetable oil hydroxylate with ethylene oxide.

60. The polyol made by the continuous process according to Claim 53 containing from about 15 wt.% to about 90 wt.% alkoxylate, based on the weight of the alkoxylated vegetable oil hydroxylate.

61. The polyol made by the continuous process according to Claim 53 containing from about 20 wt.% to about 80 wt.% alkoxylate, based on the weight of the alkoxylated vegetable oil hydroxylate.
